(19) Europäisches Patentamt

European Patent Office

Office européen des brevets

(11) Veröffentlichungsnummer: **0 217 180**
**B1**

(12) **EUROPÄISCHE PATENTSCHRIFT**

(45) Veröffentlichungstag der Patentschrift:
**29.03.89**

(21) Anmeldenummer: **86112424.6**

(22) Anmeldetag: **08.09.86**

(51) Int. Cl.⁴: **B65G 57/08**

(54) **Vorrichtung zum Stapeln und Entstapeln von Platten.**

(30) Priorität: **21.09.85 DE 3533752**

(43) Veröffentlichungstag der Anmeldung:
**08.04.87 Patentblatt 87/15**

(45) Bekanntmachung des Hinweises auf die Patenterteilung:
**29.03.89 Patentblatt 89/13**

(84) Benannte Vertragsstaaten:
**BE FR GB IT**

(56) Entgegenhaltungen:
**DE-A- 1 584 330**
**DE-A- 2 160 765**
**DE-A- 3 427 365**
**FR-A- 2 228 696**
**GB-A- 1 284 143**
**US-A- 4 444 537**

(73) Patentinhaber: **Grenzebach, Rudolf, Postfach 11 55,**
**D-8854 Asbach-Bäumenheim/Hamlar(DE)**

(72) Erfinder: **Grenzebach, Rudolf, Postfach 11 55,**
**D-8854 Asbach-Bäumenheim/Hamlar(DE)**

## Beschreibung

Die Erfindung betrifft eine Vorrichtung zum Stapeln und Entstapeln von Platten oder Scheiben, die einen zwischen einer horizontalen und einer vertikalen Stellung hin und her bewegbaren Rahmen aufweist, der mit in einer Ebene angeordneten Sauggreifern oder dgl. versehen ist, die in einer vertikalen Stellung mit der jeweils vordersten Platte eines aus ungefähr vertikal angeordneten Platten gebildeten Stapels und in der horizontalen Stellung mit einer horizontalen Platte in Kontakt bringbar sind, wobei der Rahmen an seiner in der horizontalen Stellung dem Stapel zugewandten Seite durch eine erste Führungseinrichtung bei der Bewegung zum Stapel hin in eine ungefähr vertikale Stellung anhebbar und auf einer weiteren, im wesentlichen in horizontaler Richtung zum Stapel hin verlaufenden Führungseinrichtung, um eine horizontale Achse schwenkbar abgestützt, hin und her bewegbar ist.

Eine Vorrichtung dieser Art ist beispielsweise durch die GB-PS 1 284 143 bekannt. Mit dieser Vorrichtung können sehr große Platten, vor allem auch Glasscheiben, nachdem sie in horizontaler Lage antransportiert worden sind, in einfacher Weise zu einem Stapel aus hochkantstehenden Platten gestapelt werden.

Ebenso leicht können sie mit dieser Vorrichtung von einem solchen Senkrechtstapel entnommen und auf einen Horizontalförderer abgelegt werden.

Bei der vorbekannten Vorrichtung ist eine aufwendige Schienenführung erforderlich, um den Rahmen in die Vertikallage zu überführen. Hierdurch ist auch die Arbeitsgeschwindigkeit begrenzt. Der Erfindung liegt daher die Aufgabe zugrunde, bei einer Vorrichtung der eingangs genannten Art die Führungseinrichtung etwas einfacher auszugestalten und die Vorrichtung, insbesondere den Rahmen mit seiner Führung und seinem Antrieb, so auszubilden, daß er schnell von der horizontalen in die vertikale Stellung und umgekehrt bewegt werden kann, so daß eine hohe Arbeitsgeschwindigkeit der Vorrichtung erreicht wird.

Diese Aufgabe wird erfindungsgemäß dadurch gelöst, daß die den Rahmen in die vertikale Stellung anhebende Führungseinrichtung gebildet ist durch mindestens einen um eine oberhalb des Rahmens horizontal und parallel zur Vertikalebene des Stapels verlaufende Achse schwenkbar gelagerten Arm oder dgl., der an der in der horizontalen Stellung dem Stapel zugewandten Seite des Rahmens angelenkt ist. Durch eine solche Konstruktion wird es möglich, den Rahmen schneller zu bewegen. Er kann leichter gebaut und mit weniger Reibungsverlust auf der horizontal verlaufenden Führungseinrichtung hin und her transportiert werden.

In einer bevorzugten Ausführungsform der Erfindung wird dies dadurch erreicht, daß der Rahmen mittels je einer Rolle an beiden Seiten auf je einer in ungefähr horizontaler Richtung zum Stapel hin verlaufenden Schiene geführt und mit einem Antrieb, der ihn hin und her bewegt, versehen ist. Eine besonders einfache Form des Antriebs erhält man vorteilhaft, wenn ein endloses, angetriebenes Band jeweils mit einem Trum längs der Schiene verläuft und im Bereich der Rolle mit dem Rahmen verbunden ist.

Die erfindungsgemäße Konstruktion mit einer im wesentlichen nur horizontal verlaufenden Führungsbahn bietet schließlich auch noch die Möglichkeit, daß deren Schienen an ihrem dem Stapel zugewandten Ende leicht konvex nach oben gebogen sind. Dadurch kann erreicht werden, daß der Rahmen und mit ihm die ergriffene Platte der Glasscheibe bei der Entfernung von dem aus den ungefähr senkrecht und hochkant stehenden Platten gebildeten Stapel zunächst nicht exakt geradlinig, sondern auf einem kleinen, nach oben ansteigenden Kreisbogen wegbewegt wird, wodurch die Adhäsion der vordersten Platte am Stapel leichter überwunden wird.

Die Erfindung ist in der Zeichnung beispielsweise und schematisch dargestellt. Es zeigen:

Fig. 1: Eine Seitenansicht einer erfindungsgemäßen Vorrichtung und

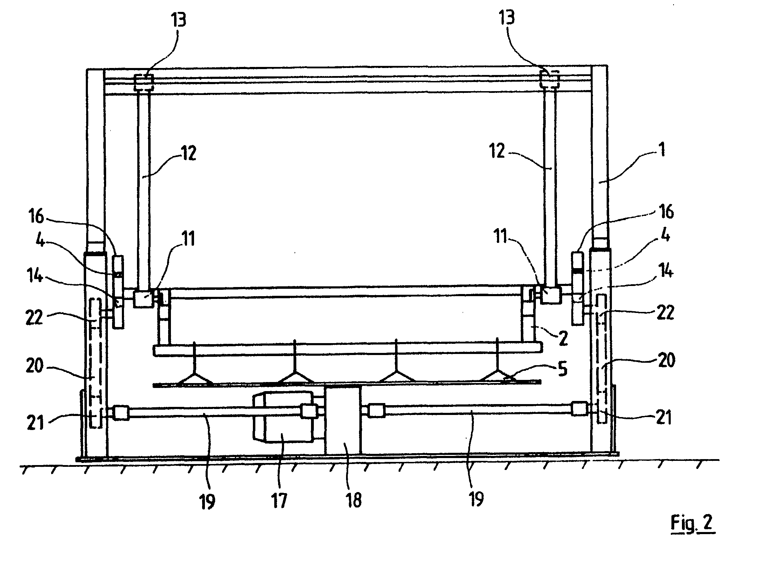

Fig. 2: Eine Ansicht der Vorrichtung gemäß Fig. 1 von rechts.

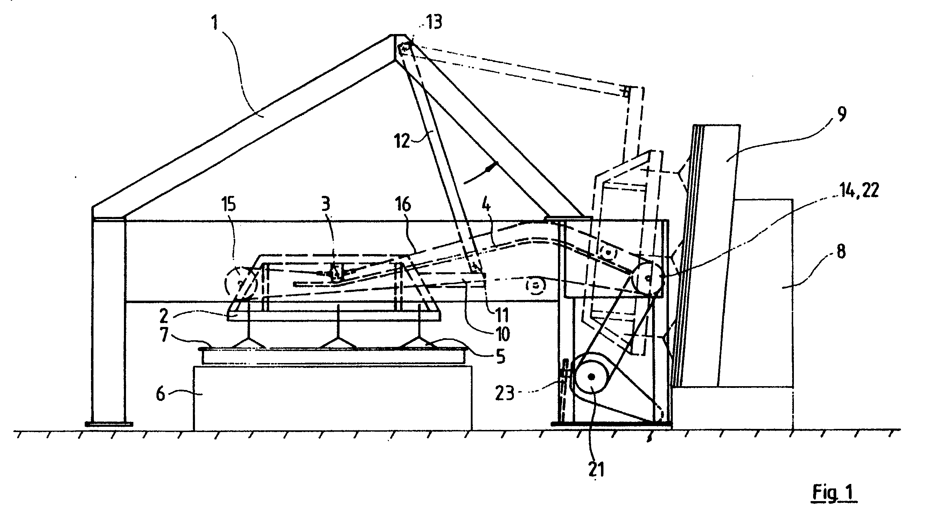

In einem Gestell 1 ist ein Rahmen 2 mit je einer Rolle 3 an seinen beiden Seiten auf im wesentlichen horizontal verlaufenden Führungsschienen 4 abgestützt und auf diesen Schienen hin und her bewegbar gelagert. Der Rahmen 2 ist an seiner Unterseite mit Sauggreifern 5 versehen. In der in Fig. 1 gezeichneten horizontalen Lage des Rahmens 2 wird bei eingeschaltetem Saugzug eine auf einer unterhalb des Gestells 1 befindlichen Fördereinrichtung 6 in Richtung senkrecht zur Zeichenebene transportierte Glasplatte 7 durch die Sauggreifer 5 festgehalten.

Am rechten Ende der in Fig. 1 dargestellten Vorrichtung befindet sich auf einem Lagerbock 8 ein Stapel 9 von in senkrechter Lage aneinander gelehnten, hochkant stehenden Glasplatten. Die dargestellte Vorrichtung ermöglicht es, von diesem Stapel 9 jeweils die vorderste Glasplatte abzunehmen und auf die Fördereinrichtung 6 zum Abtransport abzulegen.

Zu diesem Zweck erstrecken sich von dem Gestell des Rahmens 2 zwei Arme 10 seitlich in Richtung zu dem Stapel 9. Diese Arme 10 sind an ihrem Ende über je ein Gelenk 11 mit 2 Schwenkarmen 12 verbunden, die in dem Gestell 1 oberhalb des Rahmens 2 in einem Lager 13 um eine horizontale Achse schwenkbar gelagert sind. Der Rahmen 2 ist im Bereich seiner Rollen 3 an je einem über Umlenkrollen 14 und 15 laufenden, endlosen Band 16 befestigt, dessen oberes Trum jeweils entlang der Führungsschiene 4 geführt ist.

Durch Antrieb des Transportbandes 16 ist der Rahmen 2 mit den Rollen 3 auf den Schienen 4 laufend rasch hin und her in Richtung zum Stapel 9 hin und wieder zurück bewegbar. Wegen der gelenkigen Verbindung seiner Arme 10 mit den Schwenkarmen 12 richtet er sich jedoch bei der Bewegung zum Stapel 9 in eine senkrechte Lage auf, in die er, mit den Rollen 3 auf den Schienen 4 sich abstützend, durch die nach oben schwenkenden Arme 12 (vgl. Pfeilrichtung) angehoben wird. Schließlich nimmt er die in Fig. 1 in gestrichelten Linien dargestellte vertikale Stellung ein, wobei seine Sauggreifer 5 an der vordersten Glasplatte des auf dem Lagerbock 8 gegen die Vorrichtung von rechts herangefahrenen Stapels 9 anliegen.

Durch derartiges ständiges Hinundherbewegen des Rahmens 2 zum Stapel 9 und der Fördereinrichtung 6, d.h. durch Hinundherbewegen des Transportbandes 16, können selbst große und schwere Platten vom Stapel 9 zu der Fördereinrichtung 6 und ebenso in umgekehrter Richtung transportiert werden.

Der Antrieb des Transportbandes 16 erfolgt von einem Motor 17, der über ein Getriebe 18 eine Gelenkwelle 19 antreibt, die einen hier auf beiden Seiten des Gestells vorgesehenen Riementrieb betätigt. Diese besteht aus einem Treibriemen 20, der über Riemenräder 21, 22 die Umlenkrolle 14 eines jeden Transportbandes 16 entsprechend der eingestellten Drehrichtung antreibt.

Mit Hilfe der Spindel 23 können die Riemenräder 21 verstellt werden, um auf ihnen in bekannter Weise verschiedene Riemenübersetzungen einzustellen.

Zum Entstapeln wird durch Einschalten des Motorgetriebes 17/18 der Rahmen 2 in die in Fig. 1 gestrichelt dargestellte, vertikale Stellung gefahren, bis seine Sauggreifer 5 die vorderste Glasplatte des Stapels 9 berühren. Nach Einschalten des Saugzuges wird durch Umkehr der Antriebsrichtung des Transportbandes 16 der Rahmen 2 vom Stapel 9 wegbewegt. Hierbei bewegt er sich um die von ihm ergriffenen Platte zunächst wegen der leicht konvexen Krümmung der Führungsschiene 4 an ihrem stapelseitigen Ende auf einem Kreisbogen gleichzeitig nach oben und nach links, wodurch die Platte sich leichter vom Stapel löst. Der Rahmen 2 bewegt sich dann weiter und wird in der horizontalen Stellung (Fig. 1) angehalten. Nach Abschalten des Saugzuges kann die entnommene Platte 7 auf der Fördereinrichtung 6 in Richtung senkrecht zur Zeichenebene entfernt werden.

Es ist ersichtlich, daß durch Wahl der Länge der Arme 10 und 12 und der Lage der Gelenke 11 und 13 und der Rolle 3 die vertikale Stellung des Rahmens 2 relativ zum Stapel 9 beeinflußt werden kann, je nach Größe und Lage des um die Achse des Lagers 13 schwenkbaren "Dreiecks" welches durch diese "Gelenkpunkte" 3, 11 und 13 gebildet wird, so daß Stapel mit verschieden großen Platten und Plattenneigungen verarbeitet werden können.

**Patentansprüche**

1. Vorrichtung zum Stapeln und Entstapeln von Platten (7) oder Scheiben, die einen zwischen einer horizontalen und einer vertikalen Stellung hin und her bewegbaren Rahmen (2) aufweist, der mit in einer Ebene angeordneten Sauggreifern (5) oder dgl. versehen ist, die in einer vertikalen Stellung mit der jeweils vordersten Platte (7) eines aus ungefähr vertikal angeordneten Platten gebildeten Stapels (9) und in der horizontalen Stellung mit einer horizontalen Platte in Kontakt bringbar sind, wobei der Rahmen an seiner in der horizontalen Stellung dem Stapel (9) zugewandten Seite durch eine Führungseinrichtung bei der Bewegung zum Stapel hin in eine ungefähr vertikale Stellung anhebbar und auf einer weiteren, im wesentlichen in horizontaler Richtung zum Stapel hin verlaufenden Führungseinrichtung (4), um eine horizontale Achse schwenkbar abgestützt, hin und her bewegbar ist, dadurch gekennzeichnet, daß die den Rahmen in die vertikale Stellung anhebende Führungseinrichtung gebildet ist durch mindestens einen um eine oberhalb des Rahmens (2) horizontal und parallel zur Vertikalebene des Stapels (9) verlaufende Achse (13) schwenkbar gelagerten Arm (12) oder dgl., der an der in der horizontalen Stellung dem Stapel (9) zugewandten Seite des Rahmens (2) angelenkt ist.

2. Vorrichtung nach Anspruch 1, dadurch gekennzeichnet, daß der Rahmen (2) mittels je einer Rolle (3) an beiden Seiten auf je einer in ungefähr horizontaler Richtung zum Stapel hin verlaufenden Schiene (4) geführt und mit einem Antrieb (16,17) versehen ist.

3. Vorrichtung nach Anspruch 2, dadurch gekennzeichnet, daß der Antrieb durch ein jeweils mit einem Trum längs der Schiene (4) verlaufendes, endloses, angetriebenes Band (16) gebildet ist, das im Bereich der Rolle (3) mit dem Rahmen (2) verbunden ist.

4. Vorrichtung nach Anspruch 2 oder 3, dadurch gekennzeichnet, daß die Schienen (4) an ihrem dem Stapel (9) zugewandten Ende leicht konvex nach oben gebogen sind.

**Claims**

1. Means for stacking and destacking plates (7) or sheets which has a frame (2) which can be moved back and forth between a horizontal position and a vertical position, which is provided with suction cups (5) or the like in one plane, which can be brought into contact with the first plate (7) of a stack (9) formed of approximately vertically arranged plates and with a horizontal plate in the horizontal position, wherein the side of the frame which faces the stack (9) in its horizontal position can be raised into an approximately vertical position through guide means during the movement towards the stack and can be moved back and forth on further guide means (4) swingably supported about a horizontal axis substantially in a horizontal direction to the stack, characterised in that the guide means lifting the frame into the vertical position is constructed of at least one arm (12) or the like mounted pivotable about an axis (13) extending above the frame (2) horizontal and parallel to the vertical plane of the stack (9), which is linked to the side of the frame (2) which faces the stack (9) in the horizontal position.

2. Means according to claim 1, characterised in that the frame (2) is mounted on rails (4) which run towards the stack in an approximately horizontal direction by means of rollers (3) on both sides and is provided with a drive (16, 17).

3. Means according to claim 2, characterised in that the drive consists of an endless driven belt (16), one length of which runs along rails (4), which is attached to the frame (2) in the vicinity of the rollers.

4. Means according to claims 2 or 3, characterised in that the rails (4) are curved slightly upwards in a convex manner at the ends closest to the stack (9).

## Revendications

1. Dispositif pour empiler et pour désempiler des plaques (7) ou des vitres, qui comprend un cadre (2) susceptible d'aller et venir entre une position horizontale et une position verticale et muni de ventouses (5) ou d'organes analogues qui sont disposés dans un plan et qui peuvent être mis en contact, en une position verticale, avec la plaque (7) la plus en avant d'une pile (9) constituée de plaques disposées de manière sensiblement verticale et, en la position horizontale, avec une plaque horizontale, du type dans lequel le cadre est susceptible d'être soulevé, sur son côté voisin de la pile (9) dans la position horizontale, par un premier dispositif de guidage dans une position à peu près verticale, lors du déplacement vers la pile, et est susceptible d'être déplacé dans un sens et dans l'autre en basculant avec appui autour d'un axe horizontal à l'aide d'un second dispositif de guidage (4) s'étendant en direction horizontale par rapport à la pile, caractérisé en ce que le dispositif de guidage, soulevant le cadre pour le mettre en la position verticale, est formé d'au moins un bras (12) ou d'un élément analogue, qui est monté basculant autour d'un axe (13), s'étendant horizontalement au-dessus du cadre (2) et parallèlement au plan vertical de la pile (9), et qui est articulé au côté du cadre (2) tourné vers la pile (9) en la position horizontale.

2. Dispositif suivant la revendication 1, caractérisé en ce que le cadre (2) est guidé au moyen de galets (3) des deux côtés sur des rails (4) s'étendant vers la pile dans une direction sensiblement horizontale et est muni d'un dispositif d'entraînement (16, 17).

3. Dispositif suivant la revendication 2, caractérisé en ce que le dispositif d'entraînement est formé d'une bande (16) sans fin entraînée, dont l'un des brins s'étend le long des rails (4) et qui est reliée au cadre (2) dans la région du galet (3).

4. Dispositif suivant la revendication 2 ou 3, caractérisé en ce que les rails (4) sont incurvés de manière légèrement convexe vers le haut à leur extrémité tournée vers la pile (9).

Fig 1

EP 0 217 180 B1

Fig. 2

EP 0 217 180 B1